# EUROPÄISCHE PATENTSCHRIFT

(11) **EP 0 593 913 B1**
(45) Veröffentlichungstag und Bekanntmachung des Hinweises auf die Patenterteilung: **23.04.1997**
(21) Anmeldenummer: 93115124.5
(22) Anmeldetag: 20.09.1993
(51) Int. Cl.: F04C 11/00, H02K 9/28, H02K 11/00, H02K 29/06, H02K 29/14, H02K 9/22

(54) **Elektromotorisch angetriebene Hydraulikpumpe**
Electrically driven hydraulic pump
Pompe hydraulique entraînée par moteur électrique

(30) Priorität: 23.09.1992 DE 4231784
(43) Veröffentlichungstag der Anmeldung: 27.04.1994
(73) Patentinhaber: ITT Automotive Europe GmbH, 60488 Frankfurt am Main (DE)
(72) Erfinder: Beer, Wilhelm, D-65428 Rüsselsheim (DE)

(56) Entgegenhaltungen:
- DE-A- 4 016 663
- DE-A- 4 120 665
- GB-A- 2 199 081

## Beschreibung

Die Erfindung betrifft eine elektromotorisch angetriebene Hydraulikpumpe mit einem kollektorlosen, d.h. elektronisch kommutierten Elektromotor und zugehöriger Steuervorrichtung.

Die GB-A- 2 199 081, von welcher der Anspruch 1 teilweise ausgeht, beschreibt eine elektromotorisch angetriebene Hydraulikpumpe mit einem statischen Frequenzumformer, dessen Teile in der Nähe der Flüssigkeitsstromes zur Abführung der Wärmeenergie angeordnet sind.

Aufgabe der vorliegenden Erfindung ist es, eine bekannte Hydraulikpumpe so weiterzubilden, daß eine möglichst gute Kühlung der Steuerungsvorrichtung des Elektromotors bei gleichzeitig montagefreundlichem Aufbau erzielt wird.

Gelöst wird diese Aufgabe durch die im Anspruch 1 angegebenen Maßnahmen. Die Anordnung der Steuerungsvorrichtung auf der zum Hydraulikteil weisenden Seite des Elektromotors bewirkt, daß die Steuerungsvorrichtung durch die Hydraulikflüssigkeit gekühlt werden kann. Die Kühlung erfolgt direkt, wenn der Motor getaucht ist, d.h. wenn Hydraulikflüssigkeit auch im Motorgehäuse vorhanden ist. Bevorzugt wird allerdings ein trockenlaufender Motor, bei dem die Steuerungsvorrichtung möglichst nahe am kühlenden Hydraulikteil angebracht ist. Besonders vorteilhaft ist es, wenn zwischen Elektromotor und der eigentlichen Pumpeneinheit der Tank untergebracht ist, eine ausreichende Kühlung wird aber auch erreicht, wenn das in die Pumpe hineinströmende kühle Hydraulikmedium zunächst nahe an der Steuerungsvorrichtung entlang vorbeifließt. Die Integration der Steuerungsvorrichtung, insbesondere einer elektronischen Schaltung im Motorgehäuse bewirkt eine Vereinfachung der Produktion und die Möglichkeit, den vorhandenen Raum optimal zu nutzen.

Bauteile der Steuerungsvorrichtung, die sich während des Betriebs des Motors besonders stark erhitzen, werden mittels Anpreßklammern gegen eine den Elektromotor in Richtung Hydraulikeinheit begrenzende Trennwand gedrückt. Dies ermöglicht einen guten Wärmekontakt der noch dadurch verbessert werden kann, daß man die Trennwand aus einem besonders wärmeleitfähigen Material, z.B. Aluminium, fertigt, und Wärmeleitpaste zwischen Trennwand und die sich erhitzenden Bauteile anbringt. Werden die Klammern unter Vorspannung montiert, gewähren sie auch bei nachträglichem Anbringen der Trennwand eine optimale Anpressung. Die Trennwand kann ein separates Bauteil sein oder aber ein fester Bestandteil der Hydraulikeinheit.

In Anspruch 2 wird vorgeschlagen die Steuerungsvorrichtung mit Feldeffekttransistoren (FETs), als Leistungsschalter zu bestücken. Man vermeidet dadurch mechanische Schalter oder Relais, die im Dauerbetrieb schnell altern können, und hat durch die Kompaktheit und die Flexibilität der Anschlüsse der FETs die Möglichkeit, diese ohne großen Aufwand mittels der Anpreßklammern an die Trennwand zu drücken.

In Anspruch 3 wird vorgeschlagen, die Anpreßklammern und eine die Steuerungselektronik tragende Leiterplatte an einem Trägerelement zu befestigen, mittels dessen die gesamte Anordnung am Motorgehäuse des Elektromotors befestigt wird. Diese Maßnahme vereinfacht die Montage.

Nach Anspruch 4 besitzt die Trennwand beidseitig zylindrische Fortsätze, die einerseits zur Befestigung am Hydraulikteil und andererseits zur Befestigung am Motorgehäuse geeignet sind. Dies ermöglicht einen modularen Aufbau und die wahlweise Anbringung verschieden gestalteter Pumpen oder Hydraulikteile am Elektromotor. Dabei kann je nach Produktionsgegebenheiten vorgesehen sein, die Trennwand zuerst am Hydraulikteil zu befestigen und erst später den separat montierten Elektromotor anzubauen, oder umgekehrt zu verfahren.

Nach Anspruch 5 wird auf der Motorwelle ein Drehzahlgeber und auf dem Trägerelement ein Drehzahlsensor befestigt. Dieser einfache Aufbau ermöglicht, daß schon bei der Montage des Elektromotors, d.h. bevor der Hydraulikteil angebracht wird, ein Test bzw. das Justieren des Sensors durchgeführt werden kann.

Weitere vorteilhafte Ausgestaltungen der Erfindung ergeben sich aus der Beschreibung eines Ausführungsbeispiels anhand der einzigen Zeichnung und aus den im Hauptpatent beschriebenen Merkmalen.

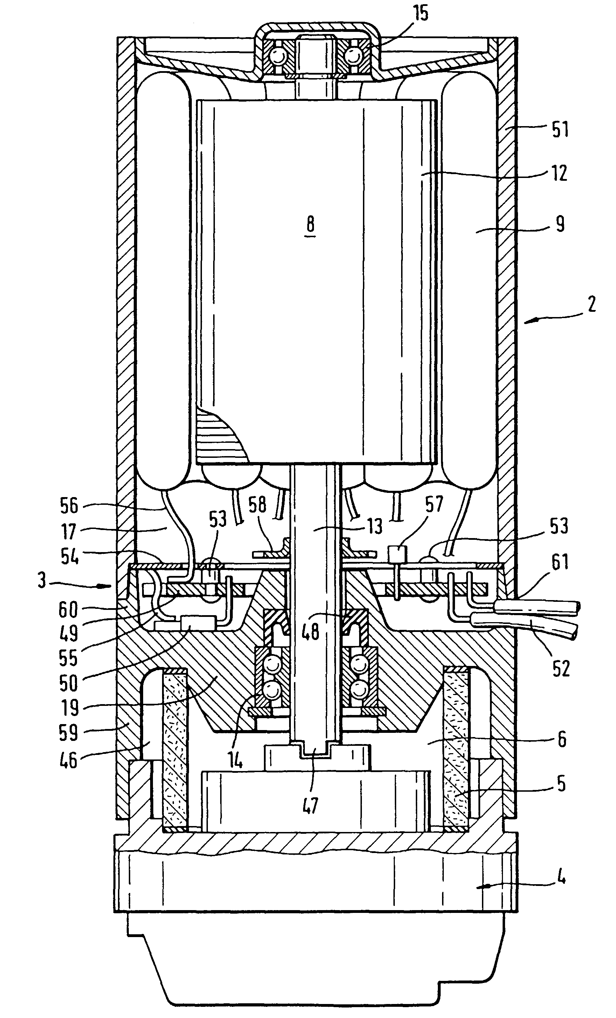

- Fig. 1: Erfindungsgemäße elektromotorisch angetriebene Hydraulikpumpe, Tank und Elektromotor in geschnittener Darstellung.

In Fig. 1 erkennt man den Elektromotor 2, die Steuerungsvorrichtung 3, den Hydraulikteil 4 sowie Filter 5 und Tank 6.

Die im Hydraulikteil 4 untergebrachte, in ihren Einzelteilen nicht dargestellte Pumpe, saugt Hydraulikflüssigkeit aus dem Ringraum 46 an und gibt sie unter Druck über einen hier nicht dargestellten Druckanschluß an einen hydraulischen Verbraucher ab. Von diesem fließt das Hydraulikmedium über einen hier ebenfalls nicht dargestellten Anschluß in den Tank 6 zurück. Zwischen Tank 6 und Ringraum 46 ist ein Filter 5 angebracht, der verhindert, daß Verunreinigungen im Hydrauliköl in den Hydraulikteil 4 gelangen können.

Die Motorwelle 13 ist an zwei Punkten gelagert (Lager 14,15) und besitzt eine Kupplung 47 zum Anschluß an den Hydraulikteil 4. Mittels einer Dichtung 48, die zwischen Trennwand 19 und Motorwelle 13 angebracht ist, wird der Tank 6 gegenüber dem Innenraum des Elektromotors 2 flüssigkeitsdicht abgedichtet. Auf der Motorwelle 13 ist der Motorrotor 8 angebracht, der aus Magneten 12 besteht. Um den Motorrotor 8 herum sind Wicklungen 9 angebracht, die von der Steuerungsvorrichtung so angesteuert werden, daß sie ein umlaufendes Magnetfeld produzieren und somit den Motorrotor 8 in Rotation versetzen.

Die Steuerungsvorrichtung 3 ist auf einer Leiterplatte 49 angebracht. Auf der Leiterplatte 49 sind alle zur Steuerung des Motors notwendigen elektronischen Bauteile angebracht, z.B. die FETs 50 sowie die Versorgungsleitungen 52. Die Leiterplatte 49 selbst ist mittels Verbindungselementen 53 an einem Trägerelement 54 befestigt. Das Trägerelement 54 ist ein vorzugsweise aus einer Scheibe gestanztes Bauteil, das einen äußeren, schmalen ringförmigen Bereich aufweist, an dessen Innenumfang sich radial nach innen weisende Abschnitte befinden, die abwechselnd in der Scheibenebene liegen bzw. z.B. s-förmig in eine Richtung aus der Scheibenebene herausgebogen sind und so die Anpreßklammern 55 bilden. Die Anpreßklammern 55 stehen unter Vorspannung und drücken die FETs 50 gegen die Trennwand 19. FET 50 und Trennwand 19 sind mittels Wärmeleitpaste thermisch gekoppelt, um eine optimale Wärmeleitung zu ermöglichen. Des weiteren gehen von der Leiterplatte 49 Wicklungsanschlüsse 56 zu den Wicklungen 9 des Elektromotors. Auf der Leiterplatte ist ebenfalls ein Drehzahlsensor 57 angebracht, der die Bewegung eines Drehzahlgebers 58, der auf der Motorwelle 13 befestigt ist, registriert und an die Steuerungselektronik weitergibt. Dabei kann als Drehzahlsensor 57 sowohl ein Hallsensor, als auch z.B. ein optischer Sensor vorgesehen sein.

Die Trennwand 19, die den Elektromotor 2 vom Hydraulikteil 4 trennt, weist zwei zylindrische Fortsätze 59,60 auf. Der eine zylindrische Fortsatz 59 dient zur Aufnahme des Hydraulikteils 4, während der andere zylindrische Fortsatz 60 in das Motorgehäuse 51 eingreift. Dabei ist im zylindrischen Fortsatz 60 eine Öffnung 61 vorgesehen, durch die die Versorgungsleitungen 52 geführt werden. In der Trennwand 19, die im Ausführungsbeispiel aus Aluminium hergestellt ist, sind das Lager 14 und die Dichtung 48 untergebracht.

### Bezugszeichenliste

- 2: Elektromotor
- 3: Steuerungsvorrichtung
- 4: Hydraulikteil
- 5: Filter
- 6: Tank
- 8: Motorrotor
- 9: Wicklung
- 12: Magnete
- 13: Motorwelle
- 14: Lager
- 15: Lager
- 17: Motorraum
- 19: Trennwand
- 46: Ringraum
- 47: Kupplung
- 48: Dichtung
- 49: Leiterplatte
- 50: FET
- 51: Motorgehäuse
- 52: Versorgungsleitungen
- 53: Verbindungselement
- 54: Trägerelement
- 55: Anpreßklammer
- 56: Wicklungsanschluß
- 57: Drehzahlsensor
- 58: Drehzahlgeber
- 59: zylindrischer Fortsatz
- 60: zylindrischer Fortsatz
- 61: Öffnung

## Patentansprüche

1. Elektromotorisch angetriebene Hydraulikpumpe mit kollektorlosem Elektromotor (2) und zugehöriger Steuerungsvorrichtung (3), wobei die Steuerungsvorrichtung (3) im Motorgehäuse (51) des Elektromotors (2) an dessen zum Hydraulikteil (4) weisender Seite angebracht ist, wobei Anpreßklammern (55) vorhanden sind, die Bauteile der Steuerungsvorrichtung, die sich im Betrieb des Motors erhitzen, gegen die den Elektromotor (2) von der Hydraulikeinheit (4) trennende Trennwand (19) drücken.

2. Elektromotorisch angetriebene Hydraulikpumpe nach Anspruch 1, dadurch **gekennzeichnet**, daß die Steuerungsvorrichtung mit FETs (50) bestückt ist.

3. Elektromotorisch angetriebene Hydraulikpumpe nach Anspruch 2, dadurch **gekennzeichnet**, daß die Anpreßklammern (55) an einem Trägerelement (54) befestigt sind, das eine Leiterplatte (49) trägt, und im Motorgehäuse (51) des Elektromotors (2) befestigt ist.

4. Elektromotorisch angetriebene Hydraulikpumpe nach Anspruch 2 oder 3, dadurch **gekennzeichnet**, daß die Trennwand (19) beidseitig zylindrische Fortsätze (59,60) aufweist, die einerseits zur Befestigung am Hydraulikteil (4) und andererseits zur Befestigung am Motorgehäuse (51) geeignet sind.

5. Elektromotorisch angetriebene Hydraulikpumpe nach einem der vorhergehenden Ansprüche, dadurch **gekennzeichnet**, daß ein Drehzahlgeber (58) auf der Motorwelle (13) und ein Drehzahlsensor (57) auf dem Trägerelement (54) befestigt sind.

## Claims

1. Electromotively driven hydraulic pump including a collectorless electric motor (2) and an associated control device (3), the control device (3) being mounted in the motor housing (51) of the electric motor (2) on the side of the motor pointing to the hydraulic part (4), including pressure clamps (55) to press components of the control device which heat during operation of the motor against the partition wall (19) separating the electric motor (2) from the hydraulic unit (4).

2. Electromotively driven hydraulic pump as claimed in claim 1,
**characterized** in that the control device is equipped with field effect transistors (50).

3. Electromotively driven hydraulic pump as claimed in claim 2,
**characterized** in that the pressure clamps (55) are attached to a carrier element (54) which carries a printed circuit board (49) and is attached in the motor housing (51) of the electric motor (2).

4. Electromotively driven hydraulic pump as claimed in claim 2 or claim 3,
**characterized** in that the partition wall (19) includes on either side cylindrical extensions (59,60) which are appropriate for the attachment to the hydraulic part (4), on the one hand, and for the attachment to the motor housing (51), on the other hand.

5. Electromotively driven hydraulic pump as claimed in any one of the preceding claims,
**characterized** in that a rotational speed transmitter (58) is fitted to the motor shaft (13) and a rotational speed sensor (57) is fitted to the carrier element (54).

## Revendications

1. Pompe hydraulique à entraînement par moteur électrique, comportant un moteur électrique (2) sans collecteur et un dispositif de commande (3) associé, le dispositif de commande (3) étant monté dans le boîtier (51) du moteur électrique (2) sur le côté de ce dernier qui est tourné vers la partie hydraulique (4), tandis qu'il est prévu des pattes d'appui (55) qui appliquent les parties du dispositif de commande qui s'échauffent pendant le fonctionnement du moteur, contre la cloison séparatrice (19) séparant le moteur électrique (2) de l'unité hydraulique (4).

2. Pompe hydraulique à entraînement par moteur électrique selon la revendication 1, caractérisée en ce que le dispositif de commande est équipé de transistors à effet de champ (50).

3. Pompe hydraulique à entraînement par moteur électrique selon la revendication 2, caractérisée en ce que les pattes d'appui (55) sont fixées sur un élément de support (54) qui porte une plaque (49) de circuit imprimé et est fixé dans le boîtier (51) du moteur électrique (2).

4. Pompe hydraulique à entraînement par moteur électrique selon la revendication 2 ou 3, caractérisée en ce que la cloison séparatrice (19) comporte, des deux côtés, des parties en saillie (59, 60) cylindriques qui sont adaptées d'une part à la fixation sur la partie hydraulique (4) et d'autre part à la fixation sur le boîtier de moteur (51).

5. Pompe hydraulique à entraînement par moteur électrique selon l'une des revendications précédentes, caractérisé en ce qu'un émetteur de vitesse de rotation (58) est fixé sur l'arbre (13) du moteur et un capteur de vitesse de rotation (57) est fixé sur l'élément de support (54).
